Europäisches Patentamt

European Patent Office

Office européen des brevets

(19)

(11) Publication number: **0 195 523 B1**

# EUROPEAN PATENT SPECIFICATION

(12)

(45) Date of publication of patent specification: **25.09.91**　(51) Int. Cl.⁵: **H04N 7/16, H04L 9/00**

(21) Application number: **86301212.6**

(22) Date of filing: **20.02.86**

(54) **Program blocking method for use in direct broadcast satellite system.**

(30) Priority: **11.03.85 US 710466**

(43) Date of publication of application:
**24.09.86 Bulletin 86/39**

(45) Publication of the grant of the patent:
**25.09.91 Bulletin 91/39**

(84) Designated Contracting States:
**BE CH DE FR GB IT LI NL SE**

(56) References cited:
**DE-A- 2 725 250**
**DE-A- 3 248 146**
**GB-A- 1 424 739**
**US-A- 3 899 633**

(73) Proprietor: **GENERAL INSTRUMENT CORPO-
RATION**
**767 Fifth Avenue**
**New York New York 10153(US)**

(72) Inventor: **Horne, Donald R.**
**20 Edgecliff Golfway 403**
**Don Mills Ontario(CA)**

(74) Representative: **Allam, Peter Clerk et al**
**LLOYD WISE, TREGEAR & CO. Norman
House 105-109 Strand**
**London WC2R 0AE(GB)**

## Description

The present invention relates generally to television program distribution systems such as direct broadcast satellite (DBS) systems.

The present invention is more particularly concerned with the selective and controlled display of television broadcast programs which are assigned to different tiers or levels in a distribution system to paying subscribers. The invention relates both to a television program distribution system comprising a transmitting station and a plurality of receiver units and to a receiver unit.

The present invention his general applicability to television distribution systems, regardless of the means employed for signal distribution. Thus, it may be used on cable, microwave, or satellite distribution systems. However, it is particularly suitable for use on direct broadcast satellite systems and, for that reason, the method is described as it would be applied to such systems.

The availability of small, low-cost television receive-only terminals in recent years has resulted in an increasing demand for direct broadcast satellite services. Such services include Pay-TV, tele-conferencing, tele-seminar, private broadcast networks, and the like.

Unlike land lines and terrestrial microwave links, satellite transmissions lack privacy. Such transmissions can be received by any TV receive-only terminal whose antenna is situated to receive the satellite signals. Accordingly, secure transmission of video and audio programming and data signals is required to provide the privacy essential to many applications.

A simple example of a direct broadcast satellite network in which security is required is one which broadcasts television signals to paying subscribers. Since any receiver having an antenna in the broadcast area can receive the satellite signals, it is necessary that the signals be coded in a way which can be decoded only by the subscriber's receivers. Certain subscribers may have paid for certain programs or program groups, whereas others may have paid for other programs or program groups. The signals must then be further encoded such that subscribers who have paid for particular programs or groups of programs can receive same, while other subscribers cannot.

In addition, it may be desirable to design the system such that a particular subscriber can preview a program not within the subscription and then decide whether he or she wishes to watch the program and, hence, pay for the privilege. In such an impulse pay-per-view (i-p-p-v) system, the decision of the subscriber must be recorded and communicated to a billing facility for appropriate billing. In such instances, the control signals to the subscriber's receiver instructing the receiver how to communicate with the billing office must be secure in order to eliminate the possibilities of theft of the service.

Usually, all programs not paid for by subscription are available on a pay-per-view basis. However, certain programs available on an impulse pay-per-view basis may be considered by the subscriber as inappropriate for viewing by the household or certain members thereof. Such programs may, for instance, include violent or sexually explicit moves or the like. It is therefore desirable that the system incorporate a means for blocking the display of such programs by the subscriber's receiver unit.

There will be described a direct broadcast satellite system in which the present invention is employed, and in which the control of the display of programs can be exercised in two different modes of operation. Such control, or program blocking, may be exercised in respect of the sort of circumstances explained above or for other reasons. Program blocking may be controlled remotely by the system operator or it may be controlled locally by the subscriber. The remote mode of control can be used to prevent the display of objectionable programming even if the receiver unit is instructed to display the program as an impulse pay-per-view item by the entry in the receiver unit of a subscriber passcode normally required to authorize viewing and billing. The local mode of control can be set up by the subscriber to only allow display of a program by specific authorization by the subscriber even if the program is one covered by the ordinary subscription.

Two parental control lists can be entered into a memory at the receiver unit. One list is entered and controlled locally by the subscriber. This is referred to as the Parental Control list. When a program on the Parental Control list is selected for viewing, the receiver will display an indication that it is on the Parental Control list. By entering the appropriate code into the receiver, the subscriber can override the Parental Control function and permit display of the program.

The other list is controlled exclusively by the system operator and is referred to as the blocking list. Control over the blocking list permits the system operator, from the transmission end, to block the display of certain programs even if they are selected for display on an impulse pay-per-view basis. The system operator can alter the blocking list as needed on a real time basis. The subscriber cannot override the blocking of programs on the blocking list without action on the part of the system operator.

The blocking list may contain programming which the subscriber has notified the system operator is considered objectionable, for example, because it contains unsuitable content. The subscriber does not wish the members of his/her household to view such programming. This list may also contain programming which was previously selected for an impulse pay-per-view transaction by a member of the household without the subscriber's permission or knowledge and for which the subscriber has previously refused to pay. Subsequent blocking of such programming eliminates future payment disputes. The system operator may also block all impulse pay-per-view transactions for failure of the subscriber to pay prior bills.

There are preferably 32 levels of subscription categories called tiers provided in the television distribution system. Each tier carries a different variety of programming. A particular program may suit several tiers, much like a library index card listing for a book having several possible topics of interest.

It will be understood from what has been described thus far, that in a television program distribution system, the availability of programs to individual subscribers is usually required to be made selective depending on which programs the subscriber has paid for or is willing to pay for. To this end programs may be assigned to different program tiers or levels whose availability is determined by the subscription paid.

Specification DE-A-2725250 (Siemens) describes a cable television distribution system in which groups of subscribers in a local area are connected to a signal distributor which contains control circuitry for selectively allowing subscribers' receiver units access to programs sent over the cable network. In the described network the programs are sent at different carrier frequencies, that is on different channels, and by means of selectively actuated, frequency-sensitive, switches the channels receivable by each subscriber are controlled. The control is exercised entirely from the transmitting station (head end) by data sent over the network to a local microprocessor, for example contained in the distributor. In this case the program tier or level is defined by its channel and the system has no provision for interaction with the subscriber that is required for I-P-P-V type of operation.

It is also possible to provide controlled viewing of programs by use of data accompanying the program signals. Specification DE-A-3 248 146 (Walter) proposes the application of frequency data to broadcast television programs or television video programs to enable such programs to be rejected by an appropriately set decoder having a data frequency-sensitive detector. However, this provision is one solely within the control of the individual viewer. It has no application to subscription TV services.

U.S. patent US-A-4 460 922 (Zenith) and International (PCT) specification WO-A-8 304 154 (Telease) both discuss the general provision of TV programming in a number of tiers or levels, the authorizing of tiers at individual subscriber's receivers, and the ability to change tier authorizations by sending addressed messages to individual receivers. Such messages are sent as part of a composite TV signal that includes program content and data content, the data content including a program tier code assigned to the program content and messages containing information identifying individual receivers for which the respective messages are intended. It is the practice in subscription TV services such as described in these two specifications to encrypt or scramble the program content at the transmission end. The receiver units contain decoders for decrypting or unscrambling an authorized program. Access to a non-authorized program can be prevented or blocked by failure to activate the decoder in such a case. The U.S. patent discusses the provision of such services particularly in connection with "over-the-air" terrestrial broadcasting or cable TV distribution. Specification WO-A-8 304 154 also discusses these services in connection with terrestrial broadcasting or cable TV but does mention the applicability of the system described to direct broadcasting by satellite (DBS).

Specification WO-A-8 304 154 provides a facility for assigning special data to accompany certain programs for reception by an individual subscriber provided that a transaction is effected indicating that the subscriber is willing to pay separately for that program. This is called an "impulse purchase capability" (IPC). Furthermore, the ability of a subscriber to receive a program assigned an IPC coding is dependent on the subscriber having a sufficient credit for the program in question.

The above system requires the special determination by the network provider of IPC programs and the special assigning of codes for that purpose. It is considered advantageous to give the individual subscriber the choice of which program tiers are to be entirely blocked and which may be watched on I-P-P-V basis, subject to any overriding control such as the blackout of a program to a given geographical area. It is also considered advantageous to give the system operator final control over the blocking of programs for other reasons such as discussed above. Neither of specifications U.S.-A-4 460 922 and WO-A-8 304 154 provides a facility whereby the individual subscriber can control locally the display of programs to children on tiers that the parent considers unsuitable. We shall describe hereinafter a system in which all the foregoing control of program display can be effected by use of the tier assignments given to individual programs.

The present invention now provides in one aspect a television broadcast system which includes a transmission station and a plurality of receiver units and in which composite television signals are distributed from the transmission station to the receiver units, the composite signals comprising program content and a data content that includes data accompanying each program and defining a tier assigned to each program, and each receiver unit comprises means storing data relating to the authorization of that receiver unit to display programs assigned to different tiers and means for comparing said stored data with the data accompanying a program for controlling the display of the program, characterized in that:

said data storing means comprises three memory areas:-

a first area storing data defining tiers that are to be entirely blocked from display;

a second area storing data defining tiers associated with programs for which a charge is to be made and that require a first further transaction authorizing the making of the charge to be entered at the receiver unit to allow display of a program; and

a third area storing data defining tiers selectable by the user of the receiver that require a second further transaction to be entered at the receiver unit to allow display of a program;

and said data storing means comprising first means for entering data into said first and second memory areas derived from the data content of signals sent from the transmitting station, and second means actuable at the receiver unit for entering data into said third memory area.

In the system of the invention the tiers defined in the first memory area are proposed to be exclusively controlled from the transmission station, being determined by the subscription paid by the subscriber or by other factors pertaining to the relationship between the system provider and the individual subscriber.

The tiers defined in the second memory area may be associated with I-P-P-V transactions. In the individual receiver unit such a transaction requirement may be appropriately displayed and the receiver unit comprises means responsive to a first further transaction to establish I-P-P-V charging for the selected program. It will be appreciated that normally the subscriber will have a choice of programs for selection. By manipulation of an input device such as a keyboard the initial selection can be made. If the program is in an I-P-P-V category it may be viewed by an entry made via the keyboard.

The tiers defined in the third memory area may be locally selected as the local parental control list.

These tiers may include tiers normally available as part of the subscription but over which the subscriber wishes to exercise his own control. Programs on such tiers may be enabled for display be entering a code which constitutes the second further transaction. This may be done via the keyboard already mentioned. Thus this parental control list is applicable to tiers not already blocked or conditionally available as defined in the first and second memory areas.

In each receiver unit, its data comparison means preferably compares the tier data accompanying a program with the tier data stored in the first, second and third memory areas in that order, appropriate action being taken if a match of the data is found at any memory area.

The tier data assigned to a program may be transmitted as the state of a bit at a bit position in a series of bits whose bit positions correspond to respective tiers. To this end in each receiver unit, each memory area stores a bit map having a bit position corresponding to each tier.

To provide the system with the ability to set up the operator-controlled memory area, each receiver unit is allotted and stores an individual address. The transmitting station is arranged for the sending of data messages to receiver units for entering tier data in the first or second memory area or in both these areas. Each such message comprises an address portion for recognition by an individual receiver unit, data defining tiers for entering in the first or second memory area, and data indicating the memory area to which the tier data. As already mentioned this is preferably done by means of the bit mapping arrangement discussed above. To process data messages, each receiver unit comprises means for comparing the address of a received message with the stored address, and means responsive to a match of these addresses to cause the tier data to be entered into the relevant memory area.

According to another aspect of the invention there is provided a receiver unit for selective reception of composite television signals distributed from a transmission station, the composite signals comprising program content and data content that includes data accompanying each program and defining a tier assigned to each program, the receiver unit comprising means storing data relating to the authorization of the receiver unit to display programs assigned to different tiers and means for comparing said stored data with the data accompanying a program for controlling the display of the program, characterized in that:

said data storing means arises three memory areas:-

a first area for storing data defining tiers that are to be entirely blocked from display;

a second area for storing data defining tiers associated with programs for which a charge is to be made and that require a first further transaction authorizing the making of the charge to be entered at the receiver unit to allow display of a program;

a third area storing data defining tiers selectable by the user of the receiver that require a second further transaction to be entered at the receiver unit to allow display of a program;

and said data storing means comprising first means for entering tier data into said first and second memory areas derived from the data content of data signals sent from the transmitting station, and second means actuable at the receiver unit for entering tier data into said third memory area.

The receiver unit may be provided with the preferred features and arranged to operate with preferred system facilities outlined above.

The system of the invention may also incorporate a geographical area blackout facility for which purpose the receiver unit may include a further bit mapped type of memory area. This facility is further discussed below.

Reverting to the application of the invention in the distribution system discussed earlier, the subscriber communicates with the system operator a choice of which tiers to pay for by subscription. All other programs are normally received on an impulse-pay-per-view basis. The system operator may choose to block entirely the viewing of any tier by a particular subscriber. This may be done at the subscriber's request, for example, because certain tiers contain objectionable programming such as violent or sexually explicit movies, or because someone has been viewing programs on a particular tier by means of impulse-pay-per-view transactions without the knowledge or permission of the subscriber. Under such circumstances, or for a variety of other reasons, the subscriber may refuse to pay claiming that a particular program was never viewed. The system operator may prefer to block all programs on that particular tier in the future until such time as the subscriber communicates other instructions directly to the system operator.

A blocking list is communicated to each receiver unit and stored therein. Some program tiers not on this blocking list may be viewed without extra charge. Other program tiers are viewed on an impulse-pay-per-view basis and are defined by an authorization list also communicated to each receiver unit. Thus, any program tier which does not match a tier in the blocking list but which matches a tier in the authorization list is eligible for an impulse-pay-per-view transaction. The subscriber will be advised of same by the appropriate indication on the display and the subscriber may proceed to enter the necessary pass code in the receiver unit for the impulse-pay-per-view transaction. However, if the program tier matches a tier designated on the blocking list controlled by the system operator, the program cannot be decoded or displayed, even on an impulse-pay-per-view basis.

The practice of the present invention will be described in greater detail as applied to a program blocking method for use in a direct broadcast satellite system, the following description being taken together with the accompanying drawings in which:

Fig. 1 is a diagram schematically representing memory for storing tier data in a receiver unit of the present invention, including an authorization bit map, a local parental control bit map, a blocking bit map controlled by the system operator, and a blackout bit map also controlled by the system operator;

Fig. 2 is a schematic diagram illustrating the composite television broadcast signal distributed through the direct broadcast satellite system in which the present invention is utilized; and

Fig. 3 is a flow chart of the operations which permit a subscriber receiver unit to decide whether a particular program can be decoded and displayed.

Mention is made below of the transmission of data using encryption. An explanation of these techniques applied in a broadcast satellite network can be obtained from co-pending European Patent Application 85307456.5 (published under the number EP-A-0179 612). Certain improvements in the cryptographic system used in the direct broadcast satellite network can be obtained from co-pending European Patent Application 86301 211.8 (published under the number EP-A-0 194 769) filed on the same date as the present application and corresponding to U.S. H-A-4694491 and US-A-4803725.

There will be described a direct broadcast satellite network in which the present invention is applied and which is designed to supply television programming to a large number of subscriber receiver units distributed in various geographic areas. Each geographic area may have a large number of subscriber receiver units contained therein.

Each of the subscriber units is supplied, via satellite, with a number of different programming tiers. Each subscriber, upon entering the network, obtains a TV receive-only unit which can be interfaced with an addressable controller-decoder supplied by the system operator.

Each subscriber chooses one or more of the programming tiers to be received on a subscription basis. The subscriber pays the system operator a periodic fee, for example monthly, which entitles him/her to view the programs on the tiers he/she has selected and paid for. Other tiers of programming can be paid for on an impulse pay-per-view basis.

Programs eligible for viewing on an impulse pay-per-view basis are previewable by the subscriber by permitting the subscriber to view the beginning of the program, for example, the first five minutes thereof, after which the subscriber must decide whether to pay for the privilege of viewing the remainder of the program.

In order to view a program eligible for an impulse pay-per-view transaction, the subscriber enters a secret passcode on a keyboard associated with the receiver unit. The addressable controller-decoder connected to the receiver unit will enter certain information into a memory relating to the identification number of the program being viewed, the time and date of the viewing, and the cost which the subscriber will have to pay for the privilege of viewing the program.

Periodically, the addressable controller-decoder will receive instructions from the system operator to forward the accumulated data relating to the previous impulse pay-per-view transactions and provide same to the system operator for billing purposes. This can be done in one of many ways. Two of the preferred ways are by telephone and by mail. If the addressable controller-decoder has telephone communications capability, that is, provided with a modem connected to a telephone line, and the necessary circuitry to operate the modem, the controllable addressable decoder will call a computer located at the transmission end and, after the appropriate identification procedure, will transfer the information concerning the impulse pay-per-view transactions stored in the addressable controller-decoder memory to the computer at the transmission end. That computer will then periodically generate a bill which will be delivered to the subscriber.

If the addressable controller-decoder does not have telephone communications capability, a credit card type device can be utilized for billing purposes. The credit card type device is essentially a memory on a card which is inserted into a slot provided on the addressable controller-decoder. Upon receiving the appropriate commands from the transmission end, the addressable controller-decoder will transfer its stored information concerning the impulse pay-per-view transactions onto the card memory. The subscriber will then mail the card memory to the system operator who will then access the card memory to ascertain the impulse pay-per-view transactions and provide the subscriber with a bill in accordance therewith.

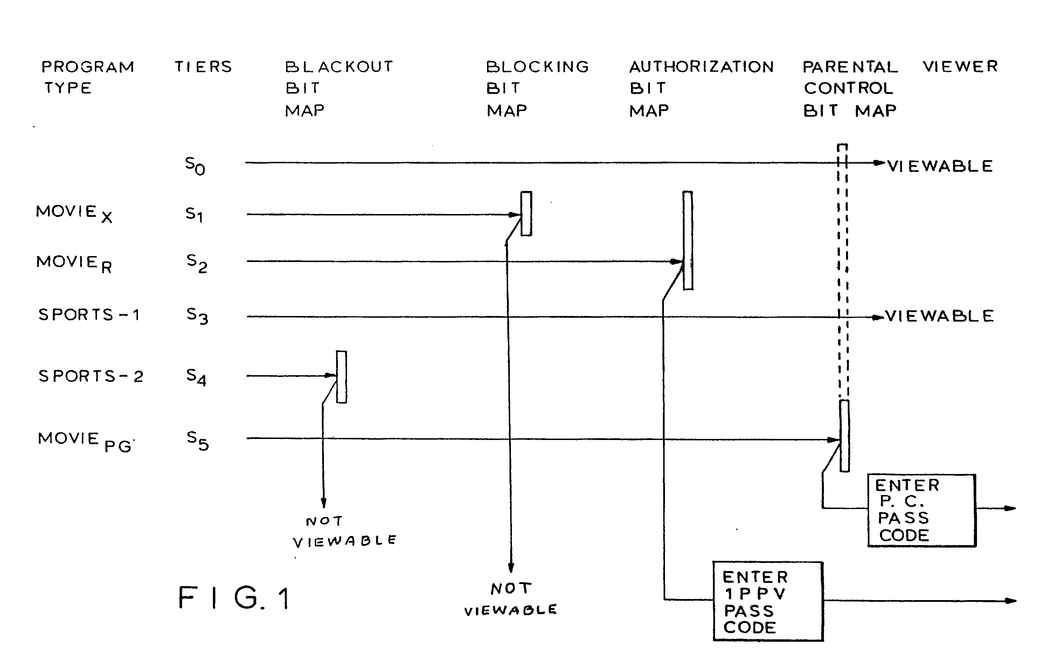

Referring now to the drawings, Fig. 1 graphically depicts the designation memory in which the authorization bit map, blocking bit map , parental control bit map, and blackout bit map are utilized within the addressable controller-decoder. While the electronic storage facilities may be considered as separate "memories", it should be understood that these "memories" may, in reality, be different locations in the same memory circuit.

Only 6 tiers of programming $S_0...S_5$ are illustrated, but it is understood that many more tiers of programming can be utilized. Programming tiers $S_0, S_3$, $S_4$ and $S_5$ are programming tiers which have been paid for by subscription and contain, for example, commercial programming which can be viewed without further action on the part of the subscriber.

Programming on tiers $S_1$ and $S_2$ not being within the subscription, are available for viewing on an impulse pay-per-view basis, as indicated by the authorization bit map . Programming tiers $S_2$ and $S_5$, for example, contain "R" rated and "PG" rated movies thereon, respectively. Both programming tiers $S_1$ and $S_2$ are eligible for impulse pay-per-view transactions as the addressable controller-decoder has previously received instructions to set the authorization bit map memory to authorize the viewing of these tiers on this basis. However, for example, the subscriber does not wish to have certain members of the household to view the "X" rated movies on programming tier $S_1$. This has been previously communicated to the system operator who has then provided the subscriber's addressable controller-decoder with particular commands such that the blocking bit map contained in the subscriber's addressable controller-decoder memory has been set to block the display of programming tier $S_1$, even if the appropriate passcode is entered into the controller which would normally permit the subscriber unit to display the program and charge the subscriber for the privilege.

Programming tiers $S_3$ and $S_4$ contain sports programs thereon. Programming tiers $S_3$ and $S_4$ like tier $S_0$, are part of the subscription and, hence, need not be authorized for impulse pay-per-view transactions. The program on $S_3$ is not blocked or blacked out and, therefore, can be viewed. However, the program on tier $S_4$ has been blacked out of the geographic area in which the subscriber unit is situated, as indicated by the blackout bit map. Accordingly, the addressable controller-decoder will not permit the programming on tier $S_4$ to be displayed.

This is common with certain sporting events which are broadcast in areas other than the locality in which the event is taking place. In order to maintain high attendance at the arena where the sporting event is occurring, the program may be sold for distribution with the restriction that it not be distributed in the arena locality. Accordingly, the system provides a mechanism whereby all receiver units located in a designated geographic area can be simultaneously prevented from displaying a program. That is, the program is blacked out in that geographic area.

For more information concerning the details of how this is accomplished, the reader is referred to co-pending European Patent Application 85307780 (published under the number EP-A-0183 3 92).

The programming on tier $S_5$, like the programming on tier $S_0$ and $S_3$ is eligible for viewing pay-per-view transactions since this programming has not been blocked by the system operator and has not been blacked out. Normally, it could be viewed.

However, in this case, programming on tier $S_5$ is designated in the locally controlled parental control bit map as being a program tier which cannot be viewed unless the parental control passcode is entered into the keyboard of the receiver unit. When and if this is done, the programming on tier $S_5$ becomes eligible

Control data, including information for storage in the authorization bit map, blocking bit map blackout bit map is distributed to the subscriber units through a data stream which is situated in consecutive horizontal blanking intervals within the composite television broadcast signal.

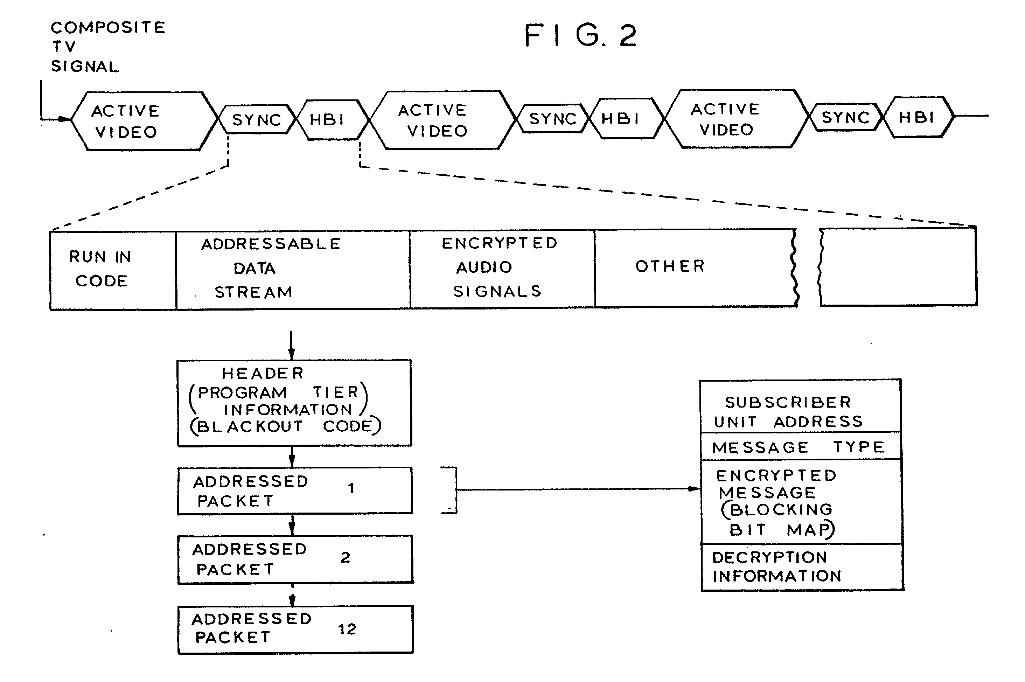

In general as shown in Fig. 2, the data system includes a header packet which contains a group address, certain program related information including the tier upon which a particular program is broadcast, and certain impulse pay-per-view information such as an identification number relating to the particular program eligible for impulse pay-per-view transactions and the cost of viewing same. This type of information is generally applicable to all receiving units in the addressed group.

The data stream also includes a plurality of addressable packets containing encrypted messages applicable to the control of particular subscriber units within the addressed group. Each subscriber unit has an individual address number. An addressable packet is addressed to the particular subscriber unit by including therein the subscriber unit's individual address. Only the subscriber unit with that individual address number can receive and decode the message in that addressed packet.

The addressed packet may contain a selected one of several different messages, along with the information necessary for the particular address subscriber unit to decode the message. For example, a particular message may cause the addressed subscriber unit to load authorization bits into its authorization bit map memory. Another message may cause an addressed receiving unit to load blocking bits into its blocking bit map memory. A third message may cause an addressed receiving unit to load blackout bits into its blackout map .

Fig. 2 schematically represents the type of composite TV signal distributed by the direct broadcast satellite network. This signal comprises a plurality of active video portions, sync portions, and horizontal blanking interval portions. A data stream, including digitized audio signals and control data, is inserted into consecutive horizontal blanking intervals of the composite television signal.

The data stream includes a run-in code portion, an addressable data stream portion, an encrypted audio signal portion, an audio code portion indicating whether the audio channels being broadcast are stereo or bilingual, a video inversion code required to descramble the video signals, and other information portions.

The addressable data stream portion includes a header packet and a plurality of addressable packets. Information relating to the control of specific receiver units is contained in addressable packets including the unique address number of the particular subscriber receiving unit.

Each of the addressable packets includes an address portion, an indication of the type of message included in the packet, and an encrypted message. The packet also includes information which will enable the addressed receiving unit only to decode the message.

Messages of various types, containing a variety of different kinds of control data, can be distributed in this fashion. For purposes of this application, it is sufficient to understand that one type of message may include a command to the addressed subscriber unit to load a particular bit map into a particular memory location. The type of message indicated defines a command for the receiving unit, that is, how the information in the message is to be processed by the receiving unit.

A typical message is illustrated as addressable packet 1. This packet includes the subscriber unit address code for one specific unit, an indication of the message type (i.e., command to set blocking bit map memory), the message (the blocking bit map to be loaded into the memory), and the necessary information for the addressed unit to decrypt the message.

Upon receipt of this packet, the receiving unit compares the address code portion with the address code in its memory. If the address codes match, the message decryption information will be used in conjunction with certain information stored in the unit to decrypt the message. The information in the message will then be processed by the receiving unit in accordance with the message type. If the message type indicates a command to set the blocking bit map, the receiving unit will use the blocking bit map in the message to set the blocking bit map.

Information for setting the authorization bit map transmitted in the same manner. A different message type will be used, this message type indicating to the addressable controller-decoder that it is being instructed to set its authorization bit map. The message will include the authorization bit map to be loaded into the authorization bit map.

Blackout bit map memories are set in a similar manner, except that blocking bit map is set globally, that is, for a large number of receiver units at one time, by addressing groups of receiver units within a geographic area to be blacked out and simultaneously loading the necessary blackout bit map information.

, In the manner set forth above, the authorization bit map , the blowing bit map and the blackout code bit map for each individual receiving unit is set by the system operator at the transmission end through the data stream. The parental control map is loaded locally in accordance with commands of the subscriber entered into the keyboard of the receiver.

Information in the bit map which are set by the system operator can be altered on a real time basis by the system operator by simply altering the information contained in a message which is addressed to a particular subscriber unit and distributed over the data stream portion of the composite television signal. This provides the system operator with a great deal of control over the individual receiving units and permits her/him to provide customized service to the individual subscribers.

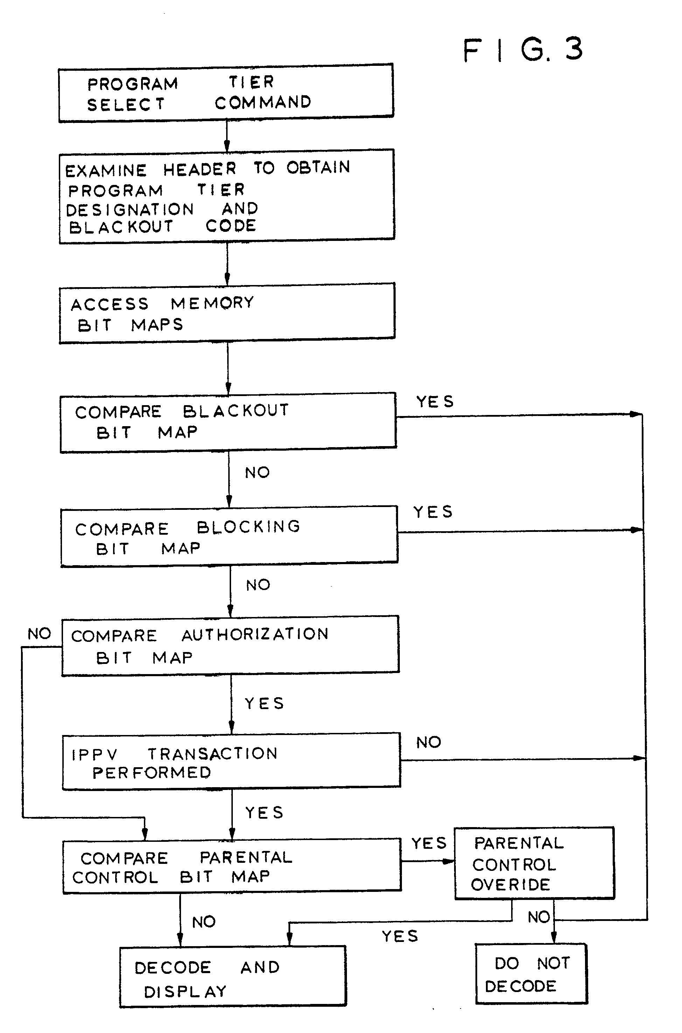

As illustrated in Fig. 3, when a subscriber enters a particular tier number in the keyboard associated with her/his receiver indicating that she/he wishes to view a program on that tier, the receiver will examine the header packet broadcast in the composite television broadcast signal to obtain the program tier designation and blackout code of the selected program. Be receiving unit will then access its maps which will have locations therein corresponding to the authorization bit map, blocking bit map, and blackout bit map, previously entered therein by the system operator and the parental control bit map entered therein by the subscriber.

The receiving unit will compare the blackout bit map with the blackout code of the header portion. If the blackout bit map has a designation corresponding to the transmitted blackout code, the program is blacked out and will not be decoded for display. Otherwise, the receiver compares the program tier designation with the designations in the blocking bit map. If the program tier designation corresponds to a designation in the blocking bit map, the program cannot be displayed. The authorization bit map is the next to be considered. If the selected tier appears in the authorization bit map, this program has been paid for by subscription and can be decoded and displayed. Otherwise, the program is eligible for impulse pay-per-view transactions. If the selected tier does not appear in the authorization bit map, this program may be viewed on an impulse pay-per-view basis by entering the necessary passcode.

The receiving unit next compares the transmitted parental guidance level with the parental control bit map. If the program is at a parental guidance level lower than the subscriber's local parental control level the program will be viewed. If the program is higher than the local level then viewing will occurr cnly if the proper parental passcode is entered at the receiving unit by the viewer.

It will now be appreciated that there has been described a program blocking method for use in a direct broadcast satellite system in which the system operator has control over program blocking at each of the individual receiving units. This control is provided by loading the memories of the respective receiving units with a blocking bit map designating particular tiers of programming which are to be blocked. Each program is transmitted with a program tier designation. Upon receipt of the program information the receiving unit compares the program tier designation with the designations in the stored blocking bit mpa. If matching designations are present, the program cannot be decoded for display.

Information for the control of the blocking bit map memory is transmitted by means of a data stream which forms a portion of the composite television broadcast signal. The data stream comprises individually addressable packets containing information which can be altered on a real time basis. Thus, the system operator can exercise control over the various receiving units on a real time basis.

## Claims

1. A television broadcast system which includes a transmission station and a plurality of receiver units and in which composite television signals are distributed from the transmission station to the receiver units, the composite signals comprising program content and a data content that includes data accompanying each program and defining a tier assigned to each program, and each receiver unit comprises means storing data relating to the authorization of that receiver unit to display programs assigned to different tier levels and means for comparing said stored data with the data accompanying a program for controlling the display of the program, characterized in that:

   said data storing means comprises three memory areas:-

a first area store data defining tiers that are to be entirely blocked from display;

a second area store data defining tiers associated with programs for which a charge is to be made and that require a first further transaction authorizing the making of the charge to be entered at the receiver unit to allow display of a program; and

a third area store data defining tiers selectable by the user of the receiver that require a second further transaction to be entered at the receiver unit to allow display of a program;

and said data storing means comprising first means for entering data into said first and second memory areas derived from the data content of signals sent from the transmitting station, and second means actuable at the receiver unit for entering data into said third memory area.

2. A system as claimed in Claim 1 in which the tiers defined in said second memory area are associated with impulse-pay-per-view (I-P-P-V) transactions and said receiver unit comprises means responsive to a first further transaction to establish I-P-P-V charging for the selected program.

3. A system as claimed in Claim 1 or 2 in which the tiers defined by said third memory area are enabled for display by entering a code and said second further transaction comprises entry of such code.

4. A system as claimed in Claim 1, 2 or 3 in which in each receiver unit, said data comparison means compares the tier data accompanying a program with the data stored in said first, second and third memory areas in that order.

5. A system as claimed in any preceding claim in which the tiers defined in said third memory area are not tiers defined in said first or second memory areas.

6. A system as claimed in any preceding claim in which the tier data assigned to a program is transmitted as the state of a bit at a bit position in a series of bits whose bit positions correspond to respective tiers, and wherein in each receiver unit, each memory area stores a bit map having a bit position corresponding to each tier.

7. A system as claimed in any preceding claim in which each receiver unit is allotted and stores an individual address, and wherein said transmitting station is arranged for the sending of data messages to receiver units for entering the tier data in said first or second memory areas thereof, each such message comprising an address portion for recognition by an individual receiver unit, data defining tiers for entering in the first or second memory area, and data indicating the memory area to which the tier data relates; and each receiver unit comprising means for comparing the address of a received message with the stored address, and means responsive to a match of the addresses to cause the tier data to be entered in the relevant memory area.

8. A system as claimed in any preceding claim in which signals relating to television program content are transmitted in encrypted form, and each receiver unit includes a decoder for decrypting the encrypted signals, the operation of the decoder to decrypt program content signals being inhibited for tiers defined in said first memory area and being inhibited for tiers defined in said second memory area unless said first further transaction is entered.

9. A system as claimed in any preceding claim in which the distribution of signals from the transmitting station to the receiver units is effected by direct broadcast by satellite (DBS).

10. A receiver unit for selective reception of composite television signals distributed from a transmission station, the composite signals comprising program content and data content that includes data accompanying each program and defining a tier assigned to each program, the receiver unit comprising means storing data relating to the authorization of the receiver unit to display programs assigned to different tiers and means for comparing said stored data with the data accompanying a program for controlling the display of the program, characterized in that:

said data storing means comprises three memory areas:-

a first area for storing data defining tiers that are to be entirely blocked from display;

a second area for storing data defining tiers associated with programs for which a charge is to be made and that require a first further transaction authorizing the making of the charge to be entered at the receiver unit to allow display of a progam;

a third area storing data defining tiers selectable by the user of the receiver that require a second further transaction to be entered at the receiver unit to allow display of a program;

and said data storing means comprising first means for entering tier data into said first and second memory areas derived from the data content of data signals sent from the transmitting station, and second means actuable at the receiver unit for entering tier data into said third memory area.

11. A receiver unit as claimed in Claim 10 in which the tiers defined in said second memory area are associated with impulse-pay-per-view (I-P-P-V) transactions and said receiver unit comprises means responsive to a first further transaction to establish I-P-P-V charging for the selected program.

12. A receiver unit as claimed in Claim 10 or 11 in which the tiers defined by said third memory area are enabled for display be entering a code and said second further transaction comprises entry of such code.

13. A receiver unit as claimed in Claim 10, 11 or 12 in which said data comparison means compares the tier data accompanying a program with the data stored in said first, second and third memory areas in that order.

14. A receiver unit as claimed in any one of Claims 10 to 13 in which the tiers defined in said third memory area are not tiers defined in said first or second memory areas.

15. A receiver unit as claimed in any one of Claims 10 to 14 which is arranged to receive the tier data assigned to a program in the form of the state of a bit at a bit position in a series of bits whose bit positions correspond to respective tiers, and wherein each memory area stores a bit map having a bit position corresponding to each tier.

16. A receiver unit as claimed in any one of Claims 10 to 15 which comprises means storing an individual address, and means for processing a received data message for setting the tier data in said first or second memory area, such message comprising an address portion for recognition by an individual receiver unit, data defining tiers for entering in the first or second memory area, and data indicating the memory area to which the tier data relates, said data processing means including means for comparing the address of a received data message with said stored address and means responsive to a match of the address to cause the tier data to be entered into the relevant memory area.

17. A receiver unit as claimed in any one of Claims 10 to 16 for receiving signals relating to said television program content which are transmitted in encrypted form, the receiver unit including a decoder for decrypting the encrypted signals, the operation of the decoder to decrypt program content signals being inhibited for tiers defined in said first memory area and being inhibited for tiers defined in said second memory area unless said first further transaction is entered.

## Revendications

1. Système de diffusion de télévision comprenant une station émettrice et une pluralité de récepteurs et dans lequel des signaux de télévision composites sont distribués depuis la station émettrice vers les récepteurs, les signaux composites comprenant une partie programme et une partie données qui comprend des données accompagnant chaque programme et définissant un niveau affecté à chaque programme, et chaque récepteur comporte des moyens mémorisant des données concernant l'autorisation de ce récepteur à visualiser des programmes affectés à différents niveaux et des moyens Pour comparer lesdites données mémorisées aux données accompagnant un programme afin de commander la visualisation du programme, caractérisé en ce que :

lesdits moyens de mémorisation de données comportent trois zones de mémoire :

une première zone mémorisant des données définissant des niveaux qui doivent être entièrement exclus d'une visualisation ;

une seconde zone mémorisant des données définissant des niveaux associés à des programmes pour lesquels une redevance doit être prélevée et qui exigent qu'une première transaction supplémentaire autorisant le prélèvement soit introduite dans le récepteur pour permettre une visualisation d'un programme ; et

une troisième zone mémorisant des données définissant des niveaux pouvant être choisis par l'utilisateur du récepteur qui nécessitent d'introduire une seconde transaction supplémentaire dans le récepteur pour permettre une visualisation d'un programme ;

et lesdits moyens de mémorisation de données comprenant des premiers moyens pour entrer des données dans lesdites première et seconde zones de mémoire prélevées du contenu de données de signaux émis par la station émettrice, et des seconds moyens actionnables sur le récepteur pour introduire des données dans ladite troisième zone de mémoire.

2. Système selon la revendication 1, dans lequel les niveaux définis dans ladite seconde zone de mémoire sont associés à des transactions à impulsions de péage (I-P-P-V) et ledit récepteur comprend des moyens sensibles à une première transaction supplémentaire pour établir une redevance de péage I-P-P-V pour le programme choisi.

3. Système selon la revendication 1 ou 2, dans lequel les niveaux définis par ladite troisième zone de mémoire sont validés pour une visualisation en introduisant un code et ladite seconde transaction supplémentaire comporte l'entrée de ce code.

4. Système selon la revendication 1, 2 ou 3, dans lequel dans chaque récepteur, lesdits moyens de comparaison de données comparent les données de niveau accompagnant un programme aux données mémorisées dans lesdites première, seconde et troisième zones de mémoire dans cet ordre.

5. Système selon l'une quelconque des revendications précédentes, dans lequel les niveaux définis dans ladite troisième zone de mémoire ne sont pas des niveaux définis dans lesdites première ou seconde zones de mémoire.

6. Système selon l'une quelconque des revendications précédentes, dans lequel les données de niveau affectées à un programme sont transmises en tant qu'état d'un bit en une position de bit dans une série de bits dont les positions de bit correspondent à des niveaux respectifs, et dans lequel dans chaque récepteur, chaque zone de mémoire mémorise une carte de bits possédant une position de bit correspondant à chaque niveau.

7. Système selon l'une quelconque des revendications précédentes, dans lequel chaque récepteur est affecté à et mémorise une adresse individuelle, et dans lequel ladite station émettrice est agencée pour l'émission de messages de données vers des récepteurs afin d'entrer les données de niveau dans lesdites première ou seconde zones de mémoire de ceux-ci, chacun de ces messages comportant une partie d'adresse en vue d'une reconnaissance, par un récepteur individuel, des données définissant des niveaux pour une introduction dans la première ou seconde zone de mémoire, et des données indiquant une zone de mémoire à laquelle ont trait les données de niveau ; et chaque récepteur comportant des moyens pour comparer l'adresse d'un message reçu à l'adresse mémorisée, et des moyens sensibles à une concordance des adresses pour provoquer l'introduction des données de niveau dans la zone de mémoire pertinente.

8. Système selon l'une quelconque des revendications précédentes, dans lequel des signaux ayant trait à un contenu de programme de télévision sont transmis sous forme cryptée, et chaque récepteur comprend un décodeur pour décrypter les signaux cryptés, le fonctionnement du décodeur pour décrypter des signaux de contenu de programme étant bloqué pour des niveaux définis dans ladite première zone de mémoire et étant bloqué pour des niveaux définis dans ladite seconde zone de mémoire à moins que ladite première autre transaction soit entrée.

9. Système selon l'une quelconque des revendications précédentes, dans lequel la distribution de signaux depuis la station émettrice vers les récepteurs est effectuée par satellite de diffusion directe (DBS).

10. Récepteur en vue de la réception sélective de signaux de télévision composites distribués depuis une station émettrice, les signaux composites comprenant une partie programme et une partie données qui comprend des données accompagnant chaque programme et définissant un niveau affecté à chaque programme, le récepteur comprenant des moyens pour mémoriser des données concernant l'autorisation du récepteur à visualiser des programmes affectés à différents niveaux et des moyens afin de comparer lesdites données mémorisées aux données accompagnant un programme afin de commander la visualisation du programme, caractérisé en ce que :

lesdits moyens de mémorisation de données comportent trois zones de mémoire :

une première zone pour mémoriser des données définissant des niveaux devant être totalement exclus d'une visualisation :

une seconde zone pour mémoriser des données définissant des niveaux associés à des programmes pour lesquels une redevance doit être prélevée et qui nécessitent qu'une première autre transaction autorisant le prélevement soit introduite dans le récepteur pour permettre une visualisation d'un programme :

une troisième zone mémorisant des données définissant des niveaux pouvant être choisis par l'utilisateur d'un récepteur qui nécessitent l'entrée d'une seconde transaction supplémentaire dans le récepteur pour permettre une visualisation d'un programme ;

et lesdits moyens mémorisant des données comportant des premiers moyens pour d'entrer des données de niveau dans lesdites première et seconde zones de mémoire prélevées du contenu de données de signaux de données émis par la station émettrice, et des seconds moyens actionnables sur le récepteur pour entrer des données de niveau dans ladite troisième zone de mémoire.

11. Récepteur selon la revendication 10, dans lequel les niveaux définis dans ladite seconde zone de mémoire sont associés à des transactions d'impulsions de péage (I-P-P-V) et ledit récepteur comporte des moyens sensibles à une première transaction supplémentaire pour établir le montant d'un péage I-P-P-V pour le programme choisi.

12. Récepteur selon la revendication 10 ou 11, dans lequel les niveaux définis par ladite troisième zone de mémoire sont validés pour une visualisation en introduisant un code et ladite seconde transaction supplémentaire comporte l'entrée de ce code.

13. Récepteur selon la revendication 10, 11 ou 12, dans lequel lesdits moyens de comparaison de données comparent les données de niveau accompagnant un programme aux données mémorisées dans lesdites première, seconde et troisième zones de mémoire dans cet ordre.

14. Récepteur selon l'une quelconque des revendications 10 à 13, dans lequel les niveaux définis dans ladite troisième zone de mémoire ne sont pas des niveaux définis dans lesdites première ou seconde zones de mémoire.

15. Récepteur selon l'une quelconque des revendications 10 à 14, agencé pour recevoir les données de niveau affectées à un programme sous la forme de l'état d'un bit en une position de bit dans une succession de bits dont les positions de bits correspondent à des niveaux respectifs, et dans lequel chaque zone de mémoire mémorise une carte de bits, possédant une position de bit correspondant à chaque niveau.

16. Récepteur selon l'une quelconque des revendications 10 à 15, comportant des moyens mémorisant une adresse individuelle, et des moyens pour traiter un message de données reçu pour fixer les données de niveau dans lesdites première ou seconde zones de mémoire, ce message comportant une partie adresse pour une reconnaissance par un récepteur individuel, des données définissant des niveaux pour une entrée dans la première ou seconde zone de mémoire, et des données indiquant la zone de mémoire à laquelle ont trait les données de niveau, lesdits moyens de traitement de données comprenant des moyens pour comparer l'adresse d'un message de données reçu à ladite adresse mémorisée, et des moyens sensibles à une concordance de l'adresse pour provoquer l'entrée des données de niveau dans la zone de mémoire concernée.

17. Récepteur selon l'une quelconque des revendications 10 à 16 pour recevoir des signaux ayant trait audit contenu de programme de télévision qui sont transmis sous forme cryptée, le récepteur comprenant un décodeur afin de décrypter les signaux cryptés, le fonctionnement du décodeur pour décrypter les signaux de contenu de programme étant bloqué pour des niveaux définis dans ladite première zone de mémoire et étant bloqué pour des niveaux définis dans ladite seconde zone de mémoire à moins que ladite première transaction supplémentaire soit entrée.

**Patentansprüche**

1. Fernsehübertragungssystem, das eine Sendestation und eine Anzahl von Empfängereinheiten enthält, und in dem zusammengesetzte Fernsehsignale von der Sendestation an die Empfängereinheiten verbreitet werden, wobei die zusammengesetzten Signale Programminhalt und einen Dateninhalt, der jedes Programm begleitende Daten enthält und der eine jedem Programm zugeordnete Ebene bestimmt, aufweisen, und wobei jede Empfängereinheit eine Einrichtung aufweist, die Daten speichert, welche sich auf die Ermächtigung des Empfängers, Programme zu zeigen, die verschiedenen Ebenenniveaus zugeordnet sind, beziehen, und eine Einrichtung zum Vergleichen der gespeicherten Daten mit den ein Programm begleitenden Daten zum Steuern des Zeigens des Programmes aufweist,
dadurch gekennzeichnet,
daß die Datenspeichereinrichtung drei Speicherbereiche aufweist:

einen ersten Bereich, der Daten speichert, die Ebenen definieren, deren Zeigen vollständig zu blockieren ist,

einen zweiten Bereich, der Daten speichert, die Ebenen bestimmen, die Programmen zugeordnet sind, für die eine Gebühr zu erheben ist und die eine erste weitere Transaktion, welche zur Gebührenerhebung ermächtigt, benötigen, die an der Empfängereinheit einzugeben ist, um das Zeigen eines Programms zu erlauben, und

einen dritten Bereich, der Daten speichert, welche durch den Benutzer des Empfängers auswählbare Ebenen bestimmen, die eine zweite weitere Transaktion benötigen, die an der Empfängereinheit einzugeben ist, um das Zeigen eines Programms zu erlauben,

und daß die Datenspeichereinrichtung eine erste Einrichtung zum Eingeben von aus dem Dateninhalt der von der Sendestation gesendeten Signale abgeleiteten Daten in den ersten und in den zweiten Speicherbereich und eine zweite Einrichtung, die an der Empfängereinheit bedienbar ist, zum Eingeben von Daten in den dritten Speicherbereich aufweist.

2. System nach Anspruch 1, dadurch gekennzeichnet, daß die in dem zweiten Speicherbereich bestimmten Ebenen Gebührenimpuls-pro-Betrachtung-(I-P-P-V)-Transaktion zugeordnet sind und daß die Empfängereinheit eine Einrichtung aufweist, die auf eine erste weitere Transaktion anspricht, um I-P-P-V-Gebührenbelastung für das gewählte Programm herzustellen.

3. System nach Anspruch 1 oder 2, dadurch gekennzeichnet, daß die durch den dritten Speicherbereich bestimmten Ebenen durch Eingabe eines Codes zum Zeigen freigegeben werden und daß die zweite weitere Transkation die Eingabe eines solchen Codes umfaßt.

4. System nach Anspruch 1, 2 oder 3, dadurch gekennzeichnet, daß in jeder Empfängereinheit eine Datenvergleichseinrichtung die ein jedes Programm begleitenden Ebenendaten mit den in den ersten, zweiten und dritten Speicherbereichen gespeicherten Daten in dieser Reihenfolge vergleicht.

5. System nach einem der vorstehenden Ansprüche, dadurch gekennzeichnet, daß die in dem dritten Speicherbereich bestimmten Ebenen nicht Ebenen sind, die in dem ersten oder in dem zweiten Speicherbereich bestimmt sind.

6. System nach einem der vorstehenden Ansprüche, dadurch gekennzeichnet, daß die einem Programm zugeordneten Ebenendaten als der Zustand eines Bits an einer Bitstelle in einer Reihe von Bits übertragen werden, deren Bitstellen den betreffenden Ebenen entsprechen, und daß in jeder Empfängereinheit jeder Speicherbereich eine Bitabbildung mit einer Bitstelle entsprechend einer jeden Ebene speichert.

7. System nach einem der vorstehenden Ansprüche, dadurch gekennzeichnet, daß jede Empfängereinheit eine ihr zugeteilte individuelle Adresse speichert, und daß die Sendestation zum Senden von Datennachrichten an Empfängereinheiten zum Eingeben der Ebenendaten in deren ersten oder zweiten Speicherbereiche eingerichtet ist, wobei jede derartige Nachricht einen Adreßteil zur Erkennung durch eine einzelne Empfängereinheit, ebenenbestimmende Daten zur Eingabe in den ersten oder zweiten Speicherbereich, und den Speicherbereich, auf den die Ebenendaten sich beziehen, anzeigende Daten aufweist, und daß jede Empfängereinheit eine Einrichtung zum Vergleichen der Adresse einer empfangenen Nachricht mit der gespeicherten Adresse, und eine Einrichtung, die auf eine Übereinstimmung der Adressen anspricht, um zu veranlassen, daß die Ebenendaten in den relevanten Speicherbereich eingegeben werden, aufweist.

8. System nach einem der vorstehenden Ansprüche, dadurch gekennzeichnet, daß sich auf den Fernsehprogramminhalt beziehende Signale in verschlüsselter Form übertragen werden, und daß jeder Empfänger einen Decodierer zum Entschlüsseln der verschlüsselten Signale enthält, wobei der Betrieb des Decoders zum Entschlüsseln von Programminhaltssignalen für in dem ersten Speicherbereich bestimmte Ebenen unterbunden ist und für im zweiten Speicherbereich bestimmte Ebenen unterbunden ist, bis die erste weitere Transaktion eingegeben ist.

9. System nach einem der vorstehenden Ansprüche, dadurch gekennzeichnet, daß die Verbreitung von Signalen von der Sendestation zu den Empfängereinheiten durch direkten Satellitenrundfunk (direct broadcast by satellite, DBS) bewirkt ist.

10. Empfängereinheit zum selektiven Empfangen von zusammengesetzten Fernsehsignalen, die von einer Sendestation verbreitet werden, wobei die zusammengesetzten Signale Programminhalt und Dateninhalt, welcher jedes Programm begleitende Daten enthält und der eine jedem Programm zugeordnete Ebene bestimmt, aufweisen, wobei die Empfängereinheit eine Einrichtung, die Daten speichert, welche sich auf die Ermächtigung der Empfängereinheit verschiedenen Ebenen zugeordnete Programme zu zeigen, beziehen, und eine Einrichtung zum Vergleichen der gespeicherten Daten mit den ein Programm begleitenden Daten zum Steuern des Zeigens des Programms aufweist,
dadurch gekennzeichnet, daß
die Datenspeichereinrichtung drei Speicherbereiche aufweist:
einen ersten Bereich zum Speichern von Daten, die Ebenen bestimmen, deren Zeigen vollständig zu blockieren ist,
einen zweiten Bereich zum Speichern von Daten, die Programmen zugeordnet sind, für die eine Gebühr zu erheben ist und die eine erste weitere Transaktion, welche zur Gebührenerhebung ermächtigt, benötigen, die an der Empfängereinheit
einzugeben ist, um das Zeigen eines Programms zu erlauben,
einen dritten Bereich zum Speichern von Daten, welche durch den Benutzer der Empfängereinheit auswählbare Ebenen bestimmen, die eine zweite weitere Transaktion benötigen, die an der Empfängereinheit einzugeben ist, um das Zeigen eines Programms zu erlauben,
und daß die Datenspeichereinrichtung eine erste Einrichtung zum Eingeben von aus dem Dateninhalt der von der Sendestation gesendeten Datensignale abgeleiteten Ebenendaten in den ersten und in den zweiten Speicherbereich und eine an der Empfängereinheit betätigbare zweite Einrichtungen zum Eingeben von Ebenendaten in den dritten Speicherbereich aufweist.

11. Empfängereinheit nach Anspruch 10, dadurch gekennzeichnet,
daß den in dem zweiten Speicherbereich bestimmten Ebenen Gebührenimpuls-pro-Betrachtung (I-P-P-V)-Transaktionen zugeordnet sind und daß die Empfängereinheit eine Einrichtung aufweist, die auf eine erste weitere Transaktion anspricht, um I-P-P-V-Gebührenerhebung für das ausgewählte Programm herzustellen.

12. Empfängereinheit nach Anspruch 10 oder 11, dadurch gekennzeichnet, daß die durch den dritten Speicherbereich bestimmten Ebenen durch Eingabe eines Codes zum Zeigen freigegeben werden und daß die zweite weitere Transaktion die Eingabe eines derartigen Codes umfaßt.

13. Empfängereinheit nach Anspruch 10, 11 oder 12, dadurch gekennzeichnet, daß die Datenvergleichseinrichtung die ein Programm begleitende Ebenendaten mit den in den ersten, zweiten und dritten Speicherbereichen gespeicherten Daten in dieser Reihenfolge vergleicht.

14. Empfängereinheit nach einem der Ansprüche 10 bis 13, dadurch gekennzeichnet, daß die in dem dritten Speicherbereich bestimmten Ebenen nicht Ebenen sind, die in den ersten oder zweiten Speicherbereichen bestimmt sind.

15. Empfängereinheit nach einem der Ansprüche 10 bis 14, dadurch gekennzeichnet, daß die Empfängereinheit zum Empfang der einem Programm in Form des Zustandes eines Bits an einer Bitstelle in einer Reihe von Bits, deren Bitstellen den betreffenden Ebenen entsprechen, zugeordneten Ebenendaten eingerichtet ist, und daß jeder Speicherbereich eine Bitabbildung mit einer Bitstelle entsprechend einer jeden Ebene speichert.

16. Empfängereinheit nach einem der Ansprüche 10 bis 15 , dadurch gekennzeichnet, daß die Empfängereinheit eine Einrichtung, die eine individuelle Adresse speichert, und eine Einrichtung zum Verarbeiten einer empfangenen Datennachricht zum Setzen der Ebenendaten in dem ersten oder in dem zweiten Speicherbereich aufweist, wobei eine derartige Nachricht einen Adreßteil zur Erkennung durch eine einzelne Empfängereinheit, Daten, die Ebenen definieren, zur Eingabe in den ersten oder zweiten Speicherbereich, und Daten, die auf den Speicherbereich hinweisen, auf den sich die Ebenendaten beziehen, aufweist, wobei die Datenverarbeitungseinrichtung eine Einrichtung zum Vergleichen der Adresse einer empfangenen Datennachricht mit der gespeicherten Adresse und eine Einrichtung, die auf ein Übereinstimmen der Adressen anspricht, um zu veranlassen, daß die Ebenendaten in den relevanten Speicherbereich eingegeben werden, enthält.

17. Empfängereinheit nach einem oder mehreren der Ansprüche 10 bis 16 zum Empfangen von sich auf den Fernsehprogramm-Inhalt beziehenden Signalen, die in verschlüsselter Form übermittelt werden, die Empfängereinheit einen Decodierer zum Entschlüsseln der verschlüsselten Signale enthält, der Betrieb des Decodierers zum Entschlüsseln des Programminhalt-Signals für in dem ersten Speicherbereich bestimmte Ebenen unterbunden wird und für in dem zweiten Speicherbereich bestimmte Ebenen unterbunden wird, bis die erste weitere Transaktion eingegeben ist.

| PROGRAM TYPE | TIERS | BLACKOUT BIT MAP | BLOCKING BIT MAP | AUTHORIZATION BIT MAP | PARENTAL CONTROL BIT MAP | VIEWER |
|---|---|---|---|---|---|---|

$S_0$ — VIEWABLE

MOVIE$_X$   $S_1$

MOVIE$_R$   $S_2$

SPORTS-1   $S_3$ — VIEWABLE

SPORTS-2   $S_4$

MOVIE$_{PG}$   $S_5$

NOT VIEWABLE

NOT VIEWABLE

ENTER P. C. PASS CODE

ENTER 1PPV PASS CODE

FIG. 1

EP 0 195 523 B1

# FIG. 2

COMPOSITE TV SIGNAL

| ACTIVE VIDEO | SYNC | HBI | ACTIVE VIDEO | SYNC | HBI | ACTIVE VIDEO | SYNC | HBI |

| RUN IN CODE | ADDRESSABLE DATA STREAM | ENCRYPTED AUDIO SIGNALS | OTHER | |

HEADER
(PROGRAM TIER)
INFORMATION
(BLACKOUT CODE)

ADDRESSED PACKET 1

ADDRESSED PACKET 2

ADDRESSED PACKET 12

SUBSCRIBER UNIT ADDRESS

MESSAGE TYPE

ENCRYPTED MESSAGE
(BLOCKING BIT MAP)

DECRYPTION INFORMATION

EP 0 195 523 B1

# F I G. 3

PROGRAM TIER SELECT COMMAND

EXAMINE HEADER TO OBTAIN PROGRAM TIER DESIGNATION AND BLACKOUT CODE

ACCESS MEMORY BIT MAPS

COMPARE BLACKOUT BIT MAP — YES

NO

COMPARE BLOCKING BIT MAP — YES

NO

NO — COMPARE AUTHORIZATION BIT MAP

YES

IPPV TRANSACTION PERFORMED — NO

YES

COMPARE PARENTAL CONTROL BIT MAP — YES — PARENTAL CONTROL OVERIDE

NO

YES

DECODE AND DISPLAY

DO NOT DECODE

NO